# EUROPEAN PATENT APPLICATION

(11) **EP 1 217 519 A2**
(43) Date of publication of application: **26.06.2002**
(21) Application number: 01307267.3
(22) Date of filing: 28.08.2001
(51) Int. Cl.: G06F 9/46

(54) **Computer and control method of the computer**

(30) Priority: 19.12.2000 JP 2000386032
(71) Applicant: FUJITSU LIMITED, Kawasaki-shi, Kanagawa 211-8588 (JP)
(72) Inventor: Miyake, Hideo, Nakahara-ku, Kawasaki-shi, Kanagawa 211 (JP); Suga, Atsuhiro, Nakahara-ku, Kawasaki-shi, Kanagawa 211 (JP); Nakamura, Yasuki, Nakahara-ku, Kawasaki-shi, Kanagawa 211 (JP)
(74) Representative: Stebbing, Timothy Charles

(57) **Abstract**

A computer which processes an interrupt is provided in which the computer includes a data holding part which holds data at a time when an interrupt starts to occur while an instruction in a program is executed. The data is used for recovery from the interrupt.

## Description

### BACKGROUND OF THE INVENTION

### 1. Field of the Invention

The present invention relates to a computer and a control method of the computer.

### 2. Description of the Related Art

Generally, in a computer system, it is necessary to deal with eventuality which is not described in a program or which can not be described in a program. In addition, it is necessary to detect operations (abnormality, error, exception and the like) other than intrinsic functions of hardware and programs and to deal with the operations. Further, it is necessary to provide communication means between a hardware mechanism and system software (especially OS), and it is necessary to carry out scheduling conflicts of use requests for shared hardware resources (processor, memory and the like) so that these resources are used efficiently.

Further, in the computer system, it is also necessary to synchronize resources (for example, a processor and an I/O device, or, processors which are connected by a network) which usually operate asynchronously each other for the purpose of performing communication and the like.

Therefore, from these, following interrupt services are carried out as means for changing, forcedly and dynamically, execution order of instructions which are denoted as a program in the computer system.

Generally, in the computer system, when the interrupt occurs, control flow branches to the interrupt service which is different from intrinsic instruction execution order (which is denoted as the program). Next, an interrupt program which is called "interrupt handler" is executed so that execution order is returned to the original program according to an interrupt return procedure which is described at the end of the interrupt program.

Generally, when control flow branches to the interrupt service which is out of the intrinsic instruction execution order (which is denoted as a program), executing instructions are interrupted and canceled by hardware. Therefore, "recovery" operation for removing effect of the instruction which is interrupted (or canceled) and "restart" operation for rerunning the instruction which is interrupted.

The "interrupt" can be broadly grouped under "precise interrupt" and "imprecise interrupt". The "precise interrupt" is an interrupt in which recovery is carried out properly and it can be insured that the interrupted instruction is restartable. The "imprecise interrupt" is an interrupt in which state of the computer can not be fully recovered for some reason or it can not be insured that the interrupted instruction is restartable.

Therefore, when control flow branches to the interrupt service which is out of the intrinsic instruction execution order (which is denoted in a program), recovery and restart are performed perfectly in the precise interrupt, and recovery and restart are not performed perfectly in the imprecise interrupt.

A pipeline method and a superscalar method are adopted as a control method for executing a plurality of instructions simultaneously in order to improving performance of a computer system. In such a control method, since interrupts may occur simultaneously in a plurality of instructions, following processes are necessary for realizing the precise interrupt.

These are (1) when executing an instruction which has a possibility of being interrupted, execution of following instructions are suppressed, (2), an interrupt which occurs first when executing a program is accepted and execution of following instructions and occurrence of interrupt are cancelled.

The operation of the above-mentioned case (1) can be realized by interlocking an instruction issuing part when the instruction which has a possibility of being interrupted is executed and the operation of the above-mentioned case (2) can be realized by providing an exception recovery mechanism such as checkpoint repair, history buffer, reorder buffer and future file and the like which are descried in "Superscalar Microprocessor Design" by Mike Johnson (Prentice-Hall, inc., 1991).

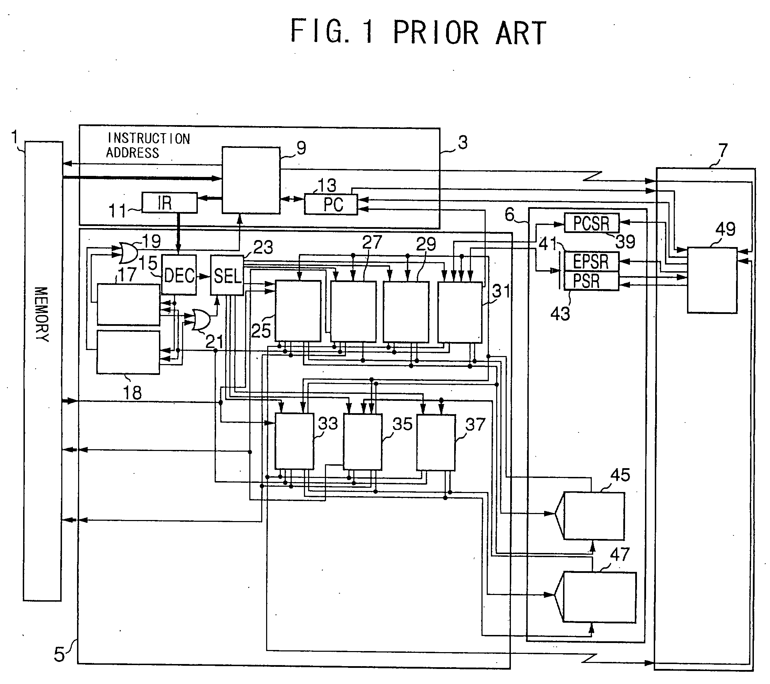

In the following, an example of a conventional computer will be described. Fig.1 is a block diagram of a conventional computer. As shown in Fig.1, the conventional computer includes a memory 1, an instruction reading part 3, an instruction execution part 5, a register control part 6 and an interrupt control part 7. The instruction reading part 3 includes an instruction reading control part 9, an instruction word register (IR) 11 and a program counter 13. The instruction execution part 5 includes an instruction decode part 15, instruction issue checking parts 17, 18, OR circuits 19, 21, a selector 23, a load instruction execution part 25, a store instruction execution part 27, an arithmetical instruction execution part 29, an other instruction execution part 31, a floating-point load instruction execution part 33, a floating-point store instruction execution part 35 and a floating-point arithmetical instruction execution part 37.

The register control part 6 includes a register (PCSR) 39, a register (EPSR) 41, a register (PSR) 43, a general register 45 and a floating-point register 47. The interrupt control part 7 includes an interrupt control circuit 49.

The instruction reading part 3 reads an instruction word indicated by the program counter 13 and provides the instruction word to the instruction execution part 5. The instruction execution part 5 executes the provided instruction. The program counter 13 indicates an address of the instruction word.

The register control part 6 performs control for read and write of data by the instruction execution part 5, the instruction reading part 3 and the interrupt control part 7.

More precisely, the instruction reading control part 9 reads an instruction word indicated by the program counter 13 from the memory 1 and writes the word into the instruction word register 11. When a branch address is provided by the instruction execution part 5, or when a branch address corresponding to interrupt or exception is provided from the interrupt control part 7, the branch address is written into the program counter 13. In the other cases, the program counter 13 is incremented so that next instruction word is indicated. In addition, when the interrupt is detected while reading the instruction word, this is notified to the interrupt control circuit 49. When an instruction issue suppression notification is received from the instruction issue checking parts 17 and 18, the instruction reading operation is suspended until the instruction issue suppression notification is released.

The instruction decode part 15 analyses the instruction provided from the instruction register 11 and provides the instruction to a corresponding instruction execution part via the selector 23. When a load instruction is provided, it is provided to the load instruction execution part 25, when a store instruction is provided, it is provided to the store instruction execution part 27, when an arithmetical instruction is provided, it is provided to the arithmetical instruction execution part 29, and when a branch instruction is provided, it is provided to the other instruction execution part 31.

In addition, when a PCSR reading instruction, a PCSR writing instruction, an EPSR reading instruction or an EPSR writing instruction is provided, it is provided to the other instruction execution part 31. Further, when a floating-point load instruction is provided, it is provided to the floating-point load instruction execution part 33, when a floating point store instruction is provided, it is provided to the floating-point store instruction execution part 35, when a floating-point arithmetical instruction is provided, it is provided to the floating-point arithmetical instruction execution part 37.

When the selector 23 receives an instruction issue suppression notification from the instruction issue checking parts 17, 18, the selector suppresses providing an instruction to the instruction execution parts. Then, the instruction issue checking part 17 checks whether a focusing instruction is executable independently of an executing instruction. When the instruction can not be executed independently due to dependency, an instruction issue suppression notification is provided to the instruction reading control part 9 or the instruction decode part 15. When execution of the dependent instruction ends, the instruction issue suppression notification is released.

In the same way, the instruction issue checking part 18 checks whether an instruction which has a possibility of being interrupted is executed. When the instruction which has a possibility of being interrupted is executed, the instruction issue suppression notification is provided to the instruction reading control part 9 or the instruction decode part 15. When execution of the instruction which has a possibility of being interrupted ends, the instruction issue suppression notification is released.

When the load instruction is provided, the load instruction execution part 25 obtains an effective address from a value read from the general register 45, reads data from an area in the memory 1 which corresponds to the effective address. When interrupt is detected while executing the instruction, this is notified to the interrupt control circuit 49. When execution of the instruction ends, it is notified to the instruction issue checking parts 17, 18.

When the store instruction is provided, the store instruction execution part 27 obtains an effective address from a value read from the general register and writes data read from the general register 45 to an area in the memory 1 corresponding to the effective address. The data written into the memory 1 is called "store data". When interrupt is detected while executing the instruction, this is notified to the interrupt control circuit 49. When execution of the instruction ends, it is notified to the instruction issue checking parts 17, 18.

When the arithmetical instruction is provided, the arithmetical instruction execution part 27 performs an operation based on a value read from the general register 45 and writes the operation result to the general register 45. The data written into the memory 1 is called "store data". When interrupt is detected while executing the instruction, this is notified to the interrupt control circuit 49. When execution of the instruction ends, it is notified to the instruction issue checking parts 17, 18.

When the branch instruction is provided, the other instruction execution part 31 provides the branch address to the program counter 13. When the interrupt recovery instruction is provided, a value of the EPSR 41 is written into the PSR 43 and data read from the PCSR 39 is provided to the program counter 13 as the branch address.

When the PCSR reading instruction is provided, data held in the PCSR 39 is read and written into the general register 45, and data read from the general register 45 is written into the PCSR 39. When the PSR reading instruction is provided, data held in the PSR 43 is written into the general register 45. When the PSR writing instruction is provided, data read from the general register 45 is written into the PSR 43.

When the EPSR reading instruction is provided, data held in the EPSR 41 is read and written into the general register 45. When the EPSR writing instruction is provided, data read from the general register 45 is written into the EPSR 41. When interrupt is detected while executing the instruction, this is notified to the interrupt control circuit 49. When execution of the instruction ends, it is notified to the instruction issue checking parts 17, 18.

When the floating-point load instruction is provided, the floating-point load instruction execution part 33 obtains an effective address from a value read from the general register 45, reads data from an area in the memory 1 corresponding to the effective address, and writes the result into the floating-point register 47. When interrupt is detected while executing the instruction, this is notified to the interrupt control circuit 49. When execution of the instruction ends, it is notified to the instruction issue checking parts 17, 18.

When the floating-point store instruction is provided, the floating-point store instruction execution part 35 obtains an effective address from a value read from the general register 45, and writes data read from the floating point register 47 into an area in the memory 1 corresponding to the effective address. The data written into the memory 1 in this way is called "store data". When interrupt is detected while executing the instruction, this is notified to the interrupt control circuit 49. When execution of the instruction ends, it is notified to the instruction issue checking parts 17, 18.

When the floating-point arithmetical instruction is provided, the floating-point arithmetical instruction execution part 37 performs an operation based on a value read from the floating-point register 47, and the result is written into the floating-point register 47. When interrupt is detected while executing the instruction, this is notified to the interrupt control circuit 49. When execution of the instruction ends, it is notified to the instruction issue checking parts 17, 18.

The PCSR 39 is a register which holds an instruction address for recovering from interrupt in which the address is set when the interrupt occurs. The PSR 43 is a register which holds a state of the computer. The EPSR 41 is a register which holds a state of the computer before the interrupt occurs which state is set when the interrupt occurs.

The interrupt control circuit 49 writes an instruction address indicating a return address from the interrupt into the PCSR 39, writes a state before interrupt into the EPSR 41, writes a state of the computer corresponding to the interrupt into the PSR 43 on the basis of interrupt notification provided from the instruction reading control part 9 or the instruction execution part 5. A branch address corresponding to the occurred interrupt is provided to the program counter 13.

In the above-mentioned conventional computer, there is a problem in that, when the instruction which has a possibility of being interrupted is executed and the instruction issue part is interlocked for realizing the precise interrupt, effective rate of operation of hardware decreases so that performance of the computer decreases.

In addition, when the exception recovery mechanism is provided for realizing the precise interrupt, although decrease of the effective rate of operation of hardware can be avoided, there is a problem in that circuit size increases.

### SUMMARY OF THE INVENTION

It is an object of the present invention to provide a computer and a control method of the computer for processing an interrupt without decreasing the effective rate of operation of hardware.

The above object is achieved by a computer which processes an interrupt when an instruction in a program is executed, the computer includes:
a data holding part which holds data at a time when the interrupt starts to occur.

According to the invention, when an interrupt is needs to be carried out, the data holding part holds data at the time. Therefore, it can be avoided to rerun an instruction which has been performed before occurrence of the interrupt so that operation after the interrupt can be continued efficiently. Thus, the interrupt can be processed without decreasing the effective rate of operation of hardware.

### BRIEF DESCRIPTION OF THE DRAWINGS

Other objects, features and advantages of the present invention will become more apparent from the following detailed description when read in conjunction with the accompanying drawings, in which:
Fig.1 is a block diagram of a conventional computer;
Fig.2 is a block diagram of a computer of an embodiment 1 of the present invention;
Fig.3 is a table indicating relationship between instructions and registers of the present invention;
Fig.4 is a flowchart showing an operation performed by execution of an interrupt processing program in the computer of the embodiment 1;
Fig.5 is a block diagram of a computer of an embodiment 2 of the present invention;
Fig.6 is table indicating bits of effective flags and corresponding registers in ESR;
Fig.7 is a table indicating relationship between instructions and registers of the present invention;
Figs.8 and 9 are flowcharts of a first case showing an operation executed by an interrupt processing program in the computer of the embodiment 2;
Figs.10 and 11 are flowcharts of a second case showing an operation executed by an interrupt processing program in the computer of the embodiment 2;
Fig.12 is a block diagram of the computer of an embodiment 3 of the present invention;
Fig. 13 is a block diagram of the computer of an embodiment 4 of the present invention.

### DETAILED DESCRIPTION OF THE PREFERRED EMBODIMENTS

In the following, embodiments of the present invention will be described in detail with reference to figures. In the drawings, the same reference numerals are used to identify corresponding features.

### [Embodiment 1]

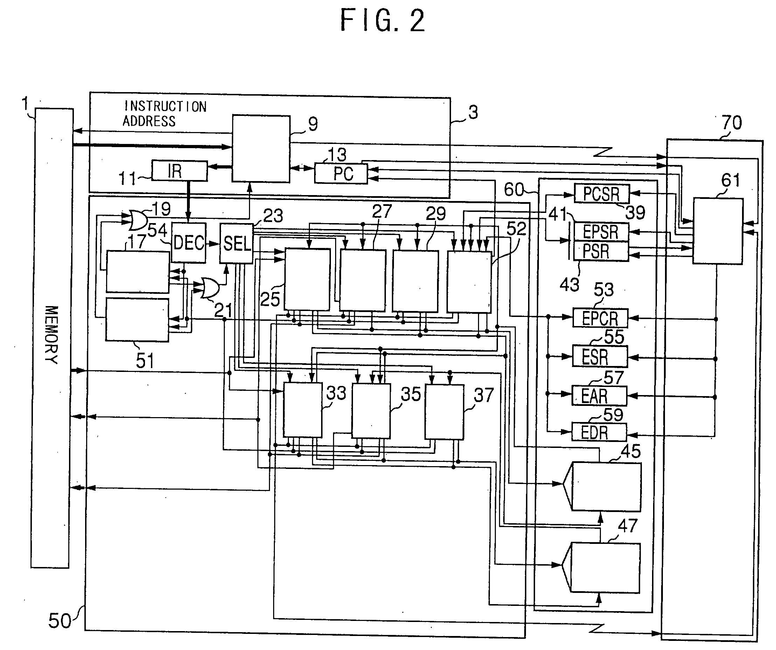

Fig.2 is a block diagram of a computer of the embodiment 1 of the present invention. As shown in Fig.2, the computer of the embodiment 1 is different from the conventional computer shown in Fig.1 in the following points.

First, a register control part 60 includes an EPCR 53, an ESR 55, an EAR 57 and an EDR 59 which are connected to an other instruction execution part 52 included in an instruction execution part 50 and to an interrupt control circuit 61 included in an interrupt control part 70. In addition, the computer includes an instruction decode part 54 instead of the instruction decode part 15 included in the instruction execution part 5, and includes an instruction issue checking part 51 instead of the instruction issue checking part 18.

When an EPCR reading instruction, an EPCR writing instruction, an ESR reading instruction, an ESR writing instruction, an EAR reading instruction, an EAR writing instruction, an EDR reading instruction or an EDR writing instruction is provided, the instruction decode part 54 of the embodiment 1 provides each instruction to the other instruction execution part 52 via the selector 23.

The instruction issue checking part 51 checks whether an instruction which has a possibility of being interrupted is executed, and, when the instruction which has a possibility of being interrupted is executed and a focusing instruction is an instruction which has a possibility of being interrupted, the instruction issue checking part 51 provides an instruction issue suppression notification to the instruction reading control part 9 or the instruction decode part 54. When execution of the instruction which has a possibility of being interrupted ends, the instruction issue suppression notification is released.

When an branch instruction is provided, the other instruction execution part 52 provides a branch address to the program counter 13. When an interruption recovery instruction is provided, a value in the EPSR 41 is written into the PSR 43, and, data read from the PCSR 39 is provided to the program counter 13 as a branch address.

When an EPCR reading instruction is provided, data held in the EPCR 53 is read and written into the general register 45. When an EPCR writing instruction is provided, data read from the general register 45 is written into the EPCR 53. When an ESR reading instruction is provided, data held in the ESR 55 is read and written into the general register 45. When an ESR writing instruction is provided, data read from the general register 45 is written into the ESR 55.

When an EAR reading instruction is provided, data held in the EAR 57 is read and written into the general register 45. When an EAR writing instruction is provided, data read from the general register 45 is written into the EAR 57.

When an EDR reading instruction is provided, data held in the EDR 59 is read and written into the general register 45. When an EDR writing instruction is provided, data read from the general register 45 is written into the EDR 59. When interrupt is detected while executing the instruction, this is notified to the interrupt control circuit 61. When execution of the instruction ends, it is notified to the instruction issue checking parts 17, 51.

The EPCR 53 is a register which holds an instruction address of an instruction which causes an interrupt, and the ESR 55 is a register which holds data which indicates a factor of the interrupt wherein both of the registers are set when the interrupt occurs. The EAR 57 is a register which holds an effective address of a load instruction, a store instruction, a floating-point load instruction, a floating-point store instruction in which the address is set when interrupt is occurred by a load instruction, a store instruction, a floating-point load instruction, or a floating-point store instruction.

The EDR 59 is a register which holds store data used for executing a store instruction and a floating-point store instruction in which the store data is set when interrupt is occurred by a store instruction or a floating-point store instruction.

The interrupt control part 61 writes an instruction address indicating a return address from interrupt into the PCSR 39, writes a state before occurrence of the interrupt into the EPSR 41, writes a state of the computer corresponding to the interrupt into the PSR 43, writes an instruction address of an instruction which causes the interrupt (which will be called "interrupt cause instruction") into the EPCR 53, and writes data indicating the interrupt factor into the ESR 55 on the basis of interrupt notification provided from the instruction reading control part 9 or the instruction execution part 50. When the interrupt cause instruction is the load instruction, the store instruction, the floating-point load instruction or the floating-point store instruction, the effective address is written into the EAR 57. When the interrupt cause instruction is the store instruction or the floating-point store instruction, the store data is written into the EDR 59. In addition, a branch address corresponding to the occurred interrupt is provided to the program counter 13.

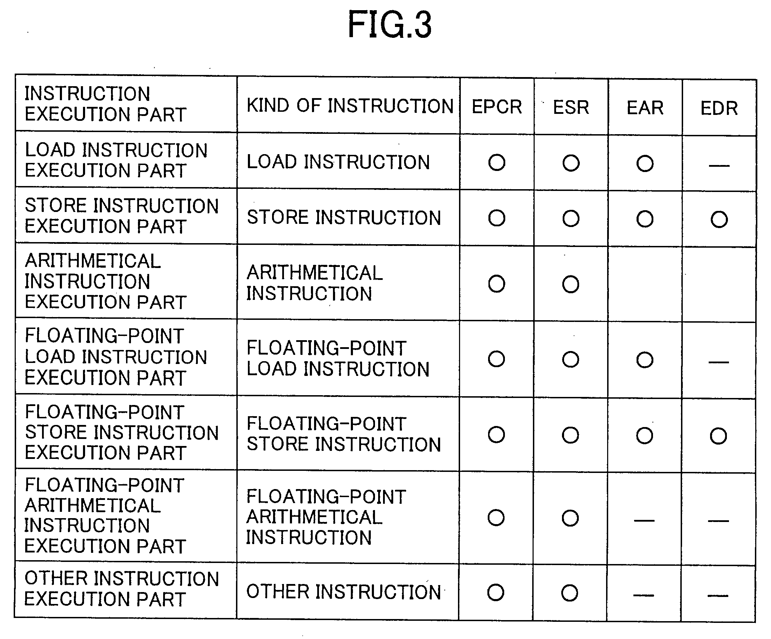

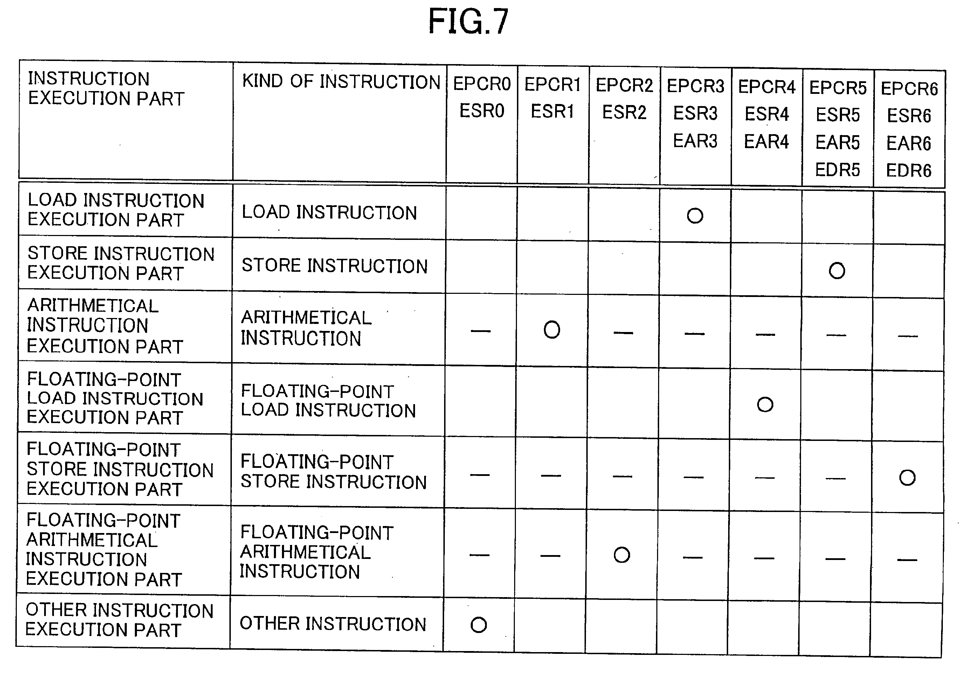

In the computer of the embodiment 1, in the interrupt operation, the EPCR 53, the ESR 55, the EAR 57 and the EDR 59 can be associated with each instruction shown in Fig.3. The white circle in Fig.3 means that the corresponding register holds data when an interrupt occurs while an instruction of the left side of the circle is executed. This is also true for after-mentioned Fig.7.

That is, as shown in Fig.3, when an interrupt occurs while an arithmetical instruction, a floating-point arithmetical instruction or other instruction is executed, an instruction address of the interrupt cause instruction is held in the EPCR 53 as information necessary for recovering the interrupt (or restarting), and data indicating the interrupt factor is held in the ESR 55. When an interrupt occurs while an load instruction, a floating-point load instruction is executed, further, an effective address is held in the EAR 57 as information necessary for recovering the interrupt (or restarting). In addition, when an interrupt occurs while a store instruction or a floating-point store instruction is executed, further, store data is held in the EDR 59 as information necessary for recovering the interrupt (or restarting).

In the computer of the embodiment 1, recover from an interrupt (or restart) can be easily realized by reading information held as shown in Fig.3 when an interrupt is processed.

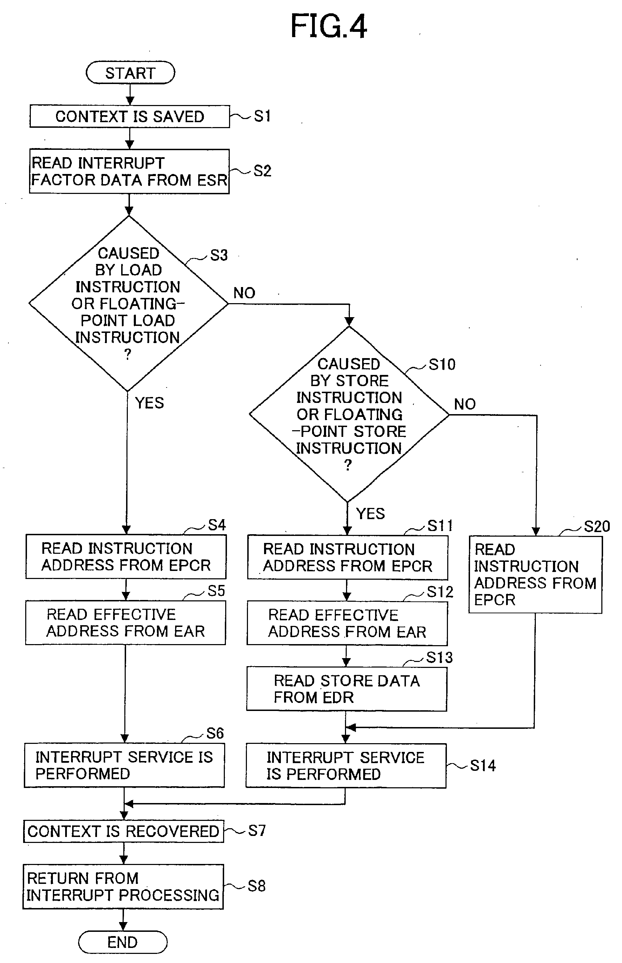

In the following, an operation performed by execution of an interrupt processing program in the computer of the embodiment 1 will be described with reference to a flowchart shown in Fig.4. In step S1, context is saved. In step S2, the other instruction execution part 52 reads interrupt factor data from the ESR 55 according to a provided ESR reading instruction. Next, in step S3, the other instruction execution part 52 refers to the interrupt factor data and determines whether the interrupt is caused by a load instruction or a floating-point load instruction. When the other instruction execution part 52 determines that the interrupt is caused by a load instruction or a floating-point load instruction, the process goes to step S4, and, when the other instruction execution part 52 does not determine that the interrupt is caused by a load instruction or a floating-point load instruction, the process goes to step S10.

The other instruction execution part 52 reads an instruction address from the EPCR 53 according to an EPCR reading instruction in step S4, and reads an effective address from the EAR 57 according to an EAR reading instruction in step S5. In step S6, an interrupt service is performed based on the above-mentioned instruction address, the interrupt cause data and the effective address in step S6.

Next, when the interrupt service ends, the context is recovered in step S7, and the computer returns from interrupt processing program operation according to an interrupt return instruction in step S8.

In step S10, the other instruction execution part 52 refers to the interrupt factor data and determines whether the interrupt is caused by a store instruction or a floating-point store instruction. When the other instruction execution part 52 determines that the interrupt is caused by a store instruction or a floating-point store instruction, the process goes to step S11, and, when the other instruction execution part 52 does not determine that the interrupt is caused by a store instruction or a floating-point store instruction, the process goes to step S20.

The other instruction execution part 52 reads an instruction address from the EPCR 53 according to EPCR reading instruction in step S11, and reads an effective address from the EAR 57 according to an EAR reading instruction in step S12, and reads store data from the EDR 59 according to an EDR reading instruction in step S13. Then, in step S14, the interrupt service is performed based on the above-mentioned instruction address, the interrupt cause data, the effective address and the store data, and the process goes to step S7.

The other instruction execution part 52 reads an instruction address from the EPCR 53 according to an EPCR reading instruction in step S20, and goes to step S14.

As mentioned above, according to the computer of the embodiment 1, since the computer includes the EPCR 53, the ESR 55, the EAR 57 and the EDR 59 where necessary data for returning to original process from the interrupt processing operation is held in these registers when interrupt occurs, and since the original process continues according to the held data after the interrupt processing ends, an interrupt can be performed with a simple configuration without decreasing effective rate of operation of hardware.

### [Embodiment 2]

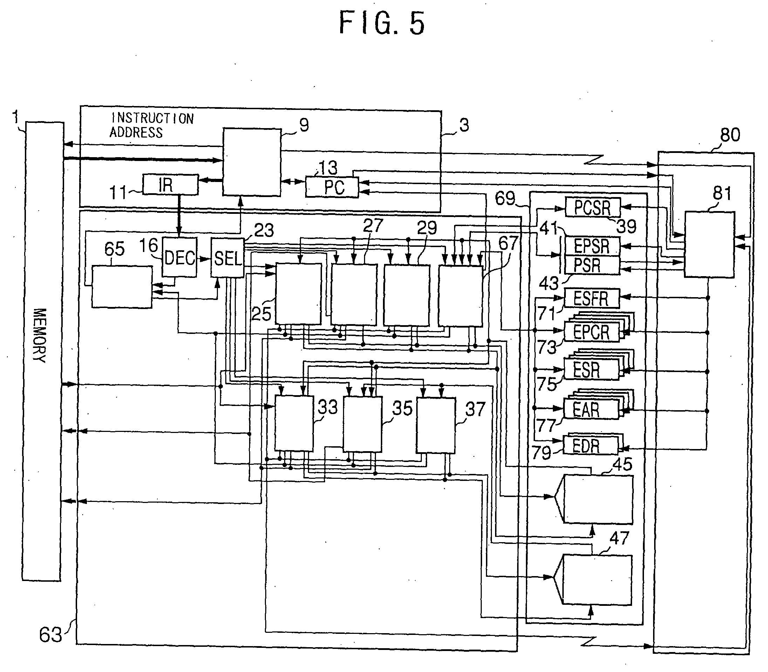

Fig.5 is a block diagram of a computer of the embodiment 2 of the present invention. As shown in Fig.5, the computer of the embodiment 2 of the present invention is almost the same as the computer of the embodiment 1 shown in Fig.2 except that an effective flag (ESFR) 71 is provided in a register control part 69, and an EPCR 73, an ESR 75, an EAR 77 and an EDR 79 each of which includes a plurality of registers are included.

Each of the effective flag (ESFR) 71, EPCR 73, ESR 75, EAR 77 and EDR 79 is connected to an other instruction execution part 67 included in an instruction execution part 63 and to an instruction control circuit 81 included in an interrupt control part 80. In addition, different from the embodiment 1, only one instruction issue checking part 65 is provided and the OR circuits 19, 20 are not included in the instruction execution part 63.

In the computer of the embodiment 2 which has the above-mentioned configuration, an instruction decode part 16 analyzes an instruction provided from the instruction word register 11 and provides the instruction to an corresponding instruction execution part via the selector 23. For example, when a branch instruction, an interrupt recovery instruction, an ESFR reading instruction or an ESFR writing instruction is provided, each instruction is provided to the other instruction execution part 67.

When a branch instruction is provided, the other instruction execution part 67 provides a branch address to the program counter 13. When an interrupt recovery instruction is provided, a value in the EPSR 41 is written into the PSR 43 and data read from the PCSR 39 is provided to the program counter 13 as the branch address.

When an ESFR reading instruction is provided, data held in the ESFR 71 is read and written into the general register 45. When an ESFR writing instruction is provided, data read from the general register 45 is written into the ESFR 71. When an interrupt is detected while executing the instruction, this is notified to the interrupt control circuit 81. When execution of the instruction ends, it is notified to the instruction issue checking part 65.

The effective flag (ESFR) 71 is an effective flag of the ESR 75 which holds interrupt factor data where each bit of the flag corresponds to each register and the flag indicates whether the interrupt factor data is held in the register. The effective flag 71 is set when an interrupt occurs.

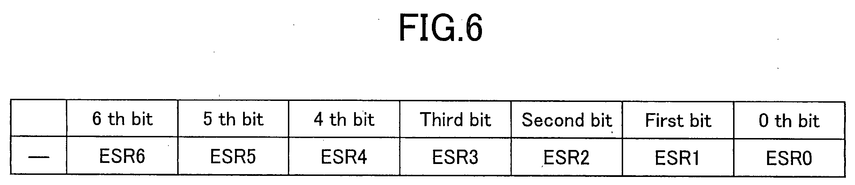

When the ESR 75 includes seven registers in parallel, each bit from 0th bit to 6th bit corresponds to each register as shown in Fig.6.

As shown in Fig.6, for example, the 0th bit corresponds to the 0th ESR register in which the 0th bit becomes 1 when the interrupt factor data is held in the 0th ESR register.

The interrupt control part 81 writes an instruction address indicating a return address from interrupt into the PCSR 39, writes a state before interrupt into the EPSR 41, writes a state of the computer corresponding to the interrupt into the PSR 43, writes an instruction address of the interrupt cause instruction into the EPCR 73, writes data indicating interrupt factor to ESR 75, and writes holding state of the data indicating interrupt factor into ESFR 71 on the basis of interrupt notification provided from the instruction reading control part 9 or the instruction execution part 63.

When the interrupt cause instruction is the load instruction, the store instruction, the floating-point load instruction or the floating-point store instruction, the effective address is written into the EAR 77. When the interrupt cause instruction is the store instruction or the floating-point store instruction, the store data is written into the EDR 79. In addition, a branch address corresponding to the occurred interrupt is provided to the program counter 13.

In the computer of the embodiment 2, for example, when the EPCR 73 includes parallel seven registers from EPCR0 to EPCR6, the ESR 75 also includes parallel seven registers from ESR0 to ESR6, the EAR 77 includes parallel four registers from-EAR3 to EAR6, and the EDR 79 includes parallel two registers of EDR5 and EDR6, these registers can be associated with each instruction as shown in Fig.7.

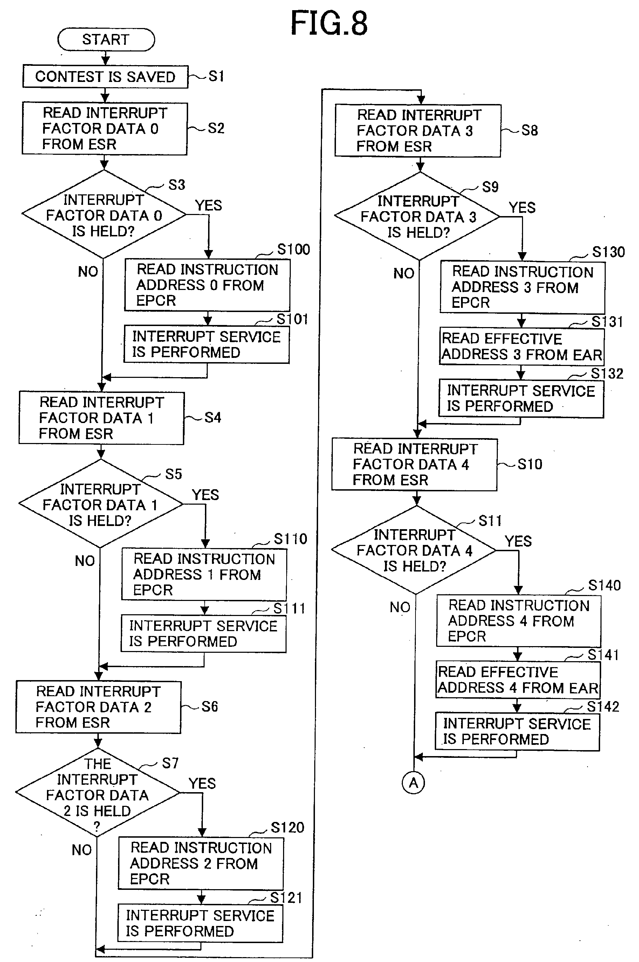

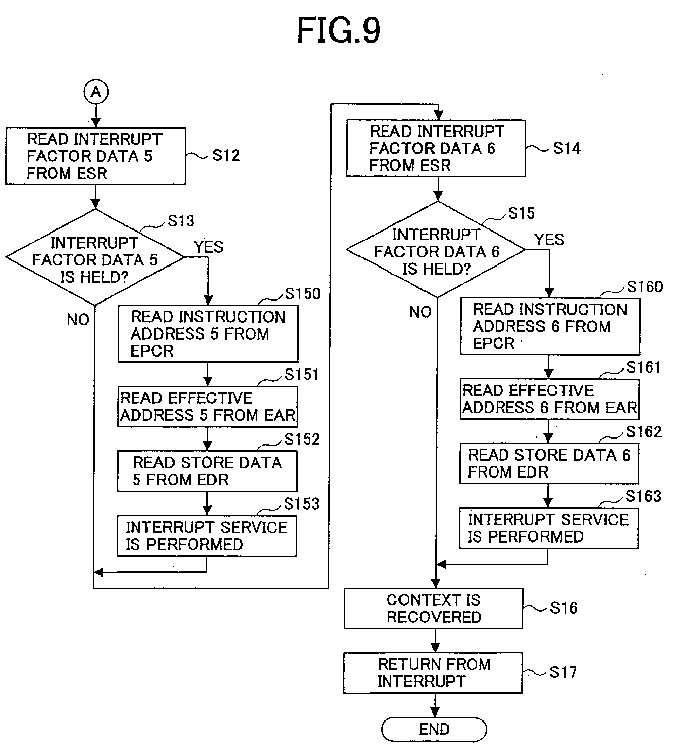

Next, operation executed by an interrupt processing program in the computer of the embodiment 2 will be described with reference to Figs.8-11 for two cases in which the ESFR 71 is used and the ESFR 71 is not used. First, operation in the case where the ESFR 71 is not used will be described with reference to Figs.8 and 9.

As shown in Fig.8, contest is saved in step S1. Then, the other instruction execution part 67 read interrupt factor data 0 from the ESR 75 according to a provided ESR reading instruction in step S2. In step S3, the other instruction execution part 67 judges whether the interrupt factor data 0 is held. When the other instruction execution part 67 judges that the interrupt factor data 0 is held, the process goes to step S100, and when the other instruction execution part 67 does not judge that the interrupt factor data 0 is held, the process goes to step S4.

In step S100, the other instruction execution part 67 reads an instruction address 0 from the EPCR 73 according to the EPCR reading instruction. Then, the interrupt service is performed based on the interrupt factor data 0 and the instruction address 0, and the process goes to step S4.

In step S4, the other instruction execution part 67 read interrupt factor data 1 from the ESR 75 according to a provided ESR reading instruction. In step S5, the other instruction execution part 67 judges whether the interrupt factor data 1 is held. When the other instruction execution part 67 judges that the interrupt factor data 1 is held, the process goes to step S110, and when the other instruction execution part 67 does not judge that the interrupt factor data 1 is held, the process goes to step S6.

In step S110, the other instruction execution part 67 reads an instruction address 1 from the EPCR 73 according to the EPCR reading instruction. Then, the interrupt service is performed based on the interrupt factor data 1 and the instruction address 1 , and the process goes to step S6.

In step S6, the other instruction execution part 67 reads interrupt factor data 2 from the ESR 75 according to a provided ESR reading instruction. In step S7, the other instruction execution part 67 judges whether the interrupt factor data 2 is held. When the other instruction execution part 67 judges that the interrupt factor data 2 is held, the process goes to step S120, and when the other instruction execution part 67 does not judge that the interrupt factor data 2 is held, the process goes to step S8.

In step S120, the other instruction execution part 67 reads an instruction address 2 from the EPCR 73 according to the EPCR reading instruction. Then, the interrupt service is performed based on the interrupt factor data 2 and the instruction address 2, and the process goes to step S8.

In step S8, the other instruction execution part 67 reads interrupt factor data 3 from the ESR 75 according to a provided ESR reading instruction. In step S9, the other instruction execution part 67 judges whether the interrupt factor data 3 is held. When the other instruction execution part 67 judges that the interrupt factor data 3 is held, the process goes to step S130, and when the other instruction execution part 67 does not judge that the interrupt factor data 3 is held, the process goes to step S10.

In step S130, the other instruction execution part 67 reads an instruction address 3 from the EPCR 73 according to the EPCR reading instruction, and the other instruction execution part 67 reads an effective address 3 from the EAR 77 according to the EAR reading instruction. Then, the interrupt service is performed based on the interrupt factor data 3, the instruction address 3 and the effective address 3, and the process goes to step S10.

In step S10, the other instruction execution part 67 reads interrupt factor data 4 from the ESR 75 according to a provided ESR reading instruction. In step S11, the other instruction execution part 67 judges whether the interrupt factor data 4 is held. When the other instruction execution part 67 judges that the interrupt factor data 4 is held, the process goes to step S140, and when the other instruction execution part 67 does not judge that the interrupt factor data 4 is held, the process goes to step S12.

In step S140, the other instruction execution part 67 reads an instruction address 4 from the EPCR 73 according to the EPCR reading instruction, and the other instruction execution part 67 reads an effective address 4 from the EAR 77 according to the EAR reading instruction. Then, the interrupt service is performed based on the interrupt factor data 4, the instruction address 4 and the effective address 4 in step S142, and goes to step S12.

In step S12, the other instruction execution part 67 reads interrupt factor data 5 from the ESR 75 according to a provided ESR reading instruction. In step S13, the other instruction execution part 67 judges whether the interrupt factor data 5 is held. When the other instruction execution part 67 judges that the interrupt factor data 5 is held, the process goes to step S150, and when the other instruction execution part 67 does not judge that the interrupt factor data 5 is held, the process goes to step S14 in Fig.9.

In step S150, the other instruction execution part 67 reads an instruction address 5 from the EPCR 73 according to the EPCR reading instruction, and the other instruction execution part 67 reads an effective address 5 from the EAR 77 according to the EAR reading instruction. In step S152, the other instruction execution part 67 reads store data 5 from the EDR 79 according to the EDR reading instruction. Then, the interrupt service is performed based on the interrupt factor data 5, the instruction address 5, the effective address 5 and the store data 5 in step S153, and goes to step S14.

In step S14, the other instruction execution part 67 reads interrupt factor data 6 from the ESR 75 according to a provided ESR reading instruction. In step S15, the other instruction execution part 67 judges whether the interrupt factor data 6 is held. When the other instruction-execution part 67 judges that the interrupt factor data 6 is held, the process goes to step S160, and when the other instruction execution part 67 does not judge that the interrupt factor data 6 is held, the process goes to step S16.

In step S160, the other instruction execution part 67 reads an instruction address 6 from the EPCR 73 according to the EPCR reading instruction, and the other instruction execution part 67 reads an effective address 6 from the EAR 77 according to the EAR reading instruction in step S161. In step S162, the other instruction execution part 67 reads store data 6 from the EDR 79 according to the EDR reading instruction. Then, interrupt service is performed based on the interrupt factor data 6, the instruction address 6, the effective address 6 and the store data 6 in step S163, and goes to step S16.

Then, the context is recovered in step S16, and the computer returns from the interrupt processing program operation according to an interrupt return instruction in step S17.

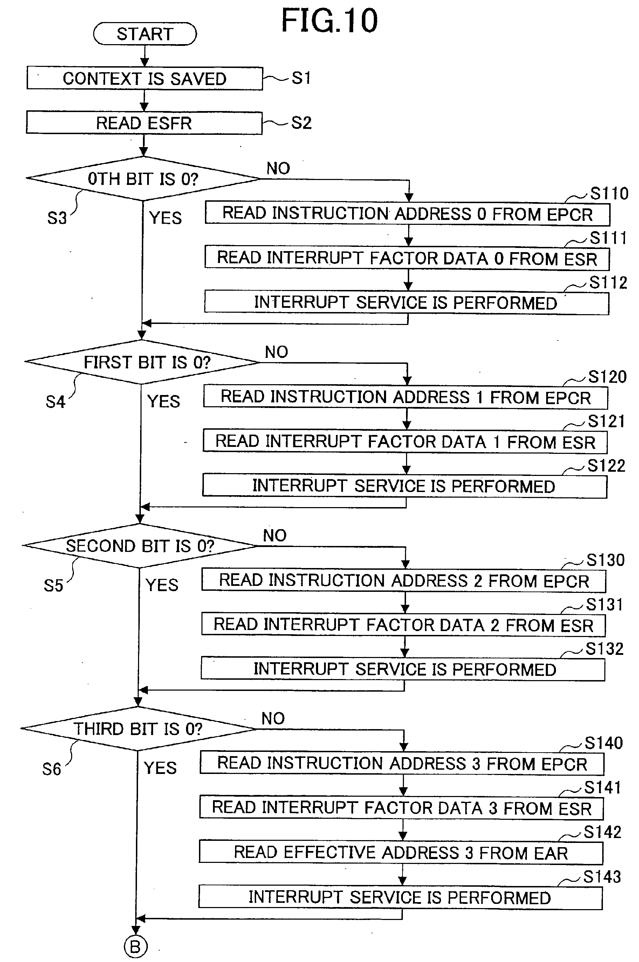

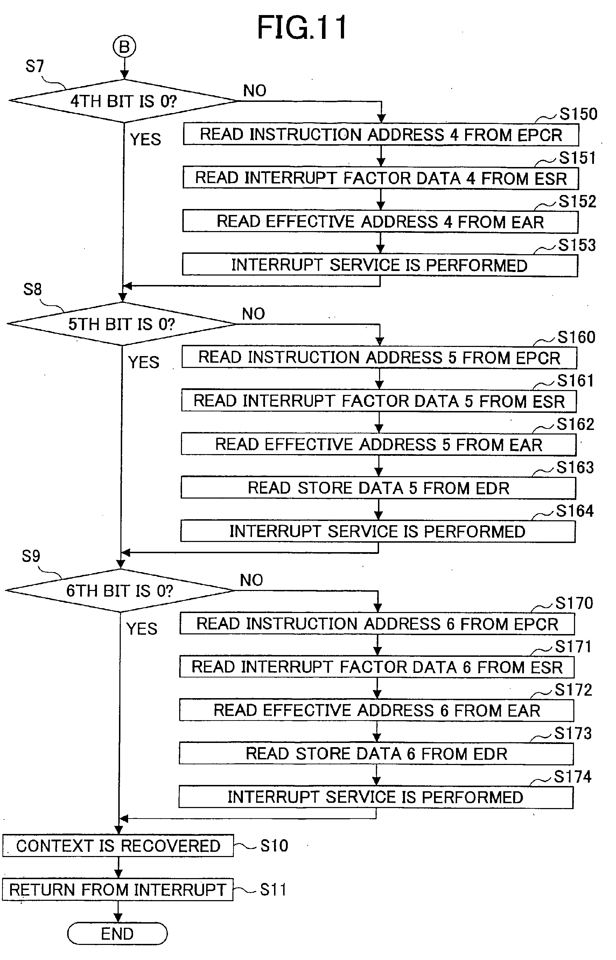

Next, operation when the ESFR 71 is used will be described with reference to Figs.10 and 11. As shown in Fig.10, the context is saved in step S1. Then, the other instruction execution part 67 reads the effective flag (ESFR) 71 according to an ESFR reading instruction in step S2. In step S3, the other instruction execution part 67 determines whether the 0th bit of the effective flag 71 is 0. When the other instruction execution part 67 determines that the 0th bit of the effective flag 71 is 0, the process goes to step S4, and when the other instruction execution part 67 determines that the 0th bit of the effective flag 71 is not 0, the process goes to step S110.

In step S110, the other instruction execution part 67 reads an instruction address 0 from the EPCR 73 according to EPCR reading instruction. In step S111, the other instruction execution part 67 reads interrupt factor data 0 from the ESR 75 according to ESR reading instruction. Then, the interrupt service is performed based on the instruction address 0 and the interrupt factor data 0 in step S112. Then, the process goes to step S4.

In step S4, the other instruction execution part 67 determines whether the first bit of the effective flag 71 is 0. When the other instruction execution part 67 determines that the first bit of the effective flag 71 is 0, the process goes to step S5, and when the other instruction execution part 67 determines that the first bit of the effective flag 71 is not 0, the process goes to step S120.

In step S120, the other instruction execution part 67 reads an instruction address 1 from the EPCR 73 according to EPCR reading instruction. In step S121, the other instruction execution part 67 reads interrupt factor data 1 from the ESR 75 according to ESR reading instruction. Then, interrupt service is performed based on the instruction address 1 and the interrupt factor data 1 in step S122, and the process goes to step S5.

In step S5, the other instruction execution part 67 determines whether the second bit of the effective flag 71 is 0. When the other instruction execution part 67 determines that the second bit of the effective flag 71 is 0, the process goes to step S6, and when the other instruction execution part 67 determines that the second bit of the effective flag 71 is not 0, the process goes to step S130.

In step S130, the other instruction execution part 67 reads an instruction address 2 from the EPCR 73 according to EPCR reading instruction. In step S131, the other instruction execution part 67 reads interrupt factor data 2 from the ESR 75 according to ESR reading instruction. Then, interrupt service is performed based on the instruction address 2 and the interrupt factor data 2 in step S132, and the process goes to step S6.

In step S6, the other instruction execution part 67 determines whether the third bit of the effective flag 71 is 0. When the other instruction execution part 67 determines that the third bit of the effective flag 71 is 0, the process goes to step S7 in Fig.11, and when the other instruction execution part 67 determines that the third bit of the effective flag 71 is not 0, the process goes to step S140.

In step S140, the other instruction execution part 67 reads an instruction address 3 from the EPCR 73 according to EPCR reading instruction. In step S141, the other instruction execution part 67 reads interrupt factor data 3 from the ESR 75 according to ESR reading instruction. In step S142, the other instruction execution part 67 reads an effective address 3 from the EAR 77 according to EAR reading instruction. Then, interrupt service is performed based on the instruction address'3, the interrupt factor data 3 and the effective address 3 in step S143, and the process goes to step S7.

In step S7, the other instruction execution part 67 determines whether the 4th bit of the effective flag 71 is 0. When the other instruction execution part 67 determines that the 4th bit of the effective flag 71 is 0, the process goes to step S8, and when the other instruction execution part 67 determines that the 4th bit of the effective flag 71 is not 0, the process goes to step S150.

In step S150, the other instruction execution part 67 reads an instruction address 4 from the EPCR 73 according to EPCR reading instruction. In step S151, the other instruction execution part 67 reads interrupt factor data 4 from the ESR 75 according to ESR reading instruction. In step S152, the other instruction execution part 67 reads an effective address 4 from the EAR 77 according to EAR reading instruction. Then, interrupt service is performed based on the instruction address 4, the interrupt factor data 4 and the effective address 4 in step S153, and the process goes to step S8.

In step S8, the other instruction execution part 67 determines whether the 5th bit of the effective flag 71 is 0. When the other instruction execution part 67 determines that the 5th bit of the effective flag 71 is 0, the process goes to step S9, and when the other instruction execution part 67 determines that the 5th bit of the effective flag 71 is not 0, the process goes to step S160.

In step S160, the other instruction execution part 67 reads an instruction address 5 from the EPCR 73 according to EPCR reading instruction. In step S161, the other instruction execution part 67 reads interrupt factor data 5 from the ESR 75 according to ESR reading instruction. In step 162, the other instruction execution part 67 reads an effective address 5 from the EAR 77 according to EAR reading instruction. In step 163, the other instruction execution part 67 reads store data 5 from the EDR 79 according to EDR reading instruction. Then, interrupt service is performed based on the instruction address 5, the interrupt factor data 5, the effective address 5 and the store data 5 in step S164, and the process goes to step S9.

In step S9, the other instruction execution part 67 determines whether the 6th bit of the effective flag 71 is 0. When the other instruction execution part 67 determines that the 6th bit of the effective flag 71 is 0, the process goes to step S10, and when the other instruction execution part 67 determines that the 6th bit of the effective flag 71 is not 0, the process goes to step S170.

In step S170, the other instruction execution part 67 reads an instruction address 6 from the EPCR 73 according to EPCR reading instruction. In step S171, the other instruction execution part 67 reads interrupt factor data 6 from the ESR 75 according to ESR reading instruction. In step S172, the other instruction execution part 67 reads an effective address 6 from the EAR 77 according to EAR reading instruction. In step S173, the other instruction execution part 67 reads store data 6 from the EDR 79 according to EDR reading instruction. Then, interrupt service is performed based on the instruction address 6, the interrupt factor data 6, the effective address 6 and the store data 6 in step S174, and the process goes to step S10.

Then, the context is recovered in step S10, and the computer returns from the interrupt processing program operation according to an interrupt return instruction in step S11.

As mentioned above, according to the computer of the embodiment 2, the computer includes the EPCR 73, the ESR 75, the EAR 77 and the EDR 79 each of which includes a plurality of registers in parallel, where necessary data for returning to original process from interrupt processing operation is held in these registers in parallel when interrupt occurs. Therefore, an instruction next to an instruction which has a possibility of being interrupted can be issued without waiting for completion of execution of the instruction which has a possibility of being interrupted. Therefore, effective rate of operation of hardware can be further improved.

### [Embodiment 3]

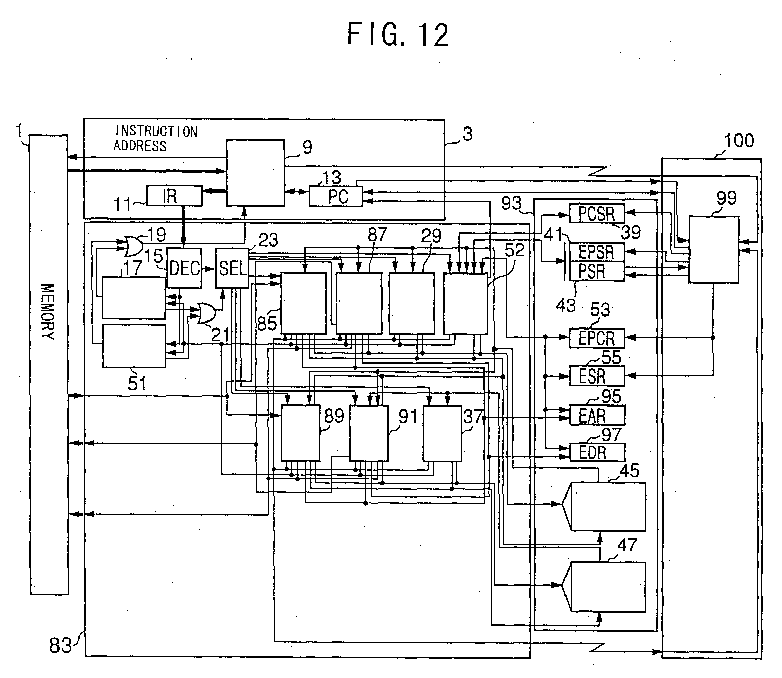

Fig.12 is a block diagram of the computer of the embodiment 3 of the present invention. As shown in Fig.12, the configuration of the computer of the embodiment 3 is almost the same as that of the embodiment 1 except that an EAR 95 included in a register control part 93 is connected to a load instruction execution part 85, a store instruction execution part 87, a floating-point load instruction execution part 89 and a floating-point store instruction execution part 91 which are included in an instruction execution part 83, and an EDR 97 is connected to a store instruction execution part 87 and a floating-point store instruction execution part 91, and an interrupt control circuit 99 included in an interrupt control part 100 is connected to the EPCR 53 and the ESR 55 and is not connected to the EAR 95 and the EDR 97.

In the computer of the embodiment 3 having the above-mentioned configuration, when a load instruction is provided, the load instruction execution part 85 obtains an effective address from a value read from a general register 45, reads data from an area in the memory 1 corresponding to the effective address, and writes the data to the general register 45. When interrupt is detected while executing the instruction, this is notified to the interrupt control circuit 99 and the effective address is written into the EAR 95. When execution of the instruction ends, it is notified to the instruction issue checking parts 17, 51.

When the store instruction is provided, the store instruction execution part 87 obtains an effective address from a value read from the general register 45 and writes data read from the general register 45 to an area in the memory 1 corresponding to the effective address. When interrupt is detected while executing the instruction, this is notified to the interrupt control circuit 49, and the effective address is written into the EAR 95 and the store data is written into the EDR 97. When execution of the instruction ends, it is notified to the instruction issue checking parts 17, 51.

When the floating-point load instruction is provided, the floating-point load instruction execution part 89 obtains an effective address from a value read from the general register 45, reads data from an area in the memory 1 corresponding to the effective address, and writes the result into the floating-point register 47. When interrupt is detected while executing the instruction, this is notified to the interrupt control circuit 49, and the effective address is written into the EAR 95. When execution-of the instruction ends, it is notified to the instruction issue checking parts 17, 51.

When the floating-point store instruction is provided, the floating-point store instruction execution part 91 obtains an effective address from a value read from the general register 45, and writes data read from the floating-point register 47 into an area in the memory 1 corresponding to the effective address. When interrupt is detected while executing the instruction, this is notified to the interrupt control circuit 49, and the effective address is written into the EAR 95 and the store data is written into the EDR 97. When execution of the instruction ends, it is notified to the instruction issue checking parts 17, 51.

As for the other operation, the computer of the embodiment 3 operates according to the flowchart shown in Fig.4 like the computer of the embodiment 1.

In the same way as the computer of the embodiment 1, according to the computer of the embodiment 3 of the present invention, an interrupt processing can be performed with a simple configuration without decreasing effective rate of operation of hardware.

### [Embodiment 4]

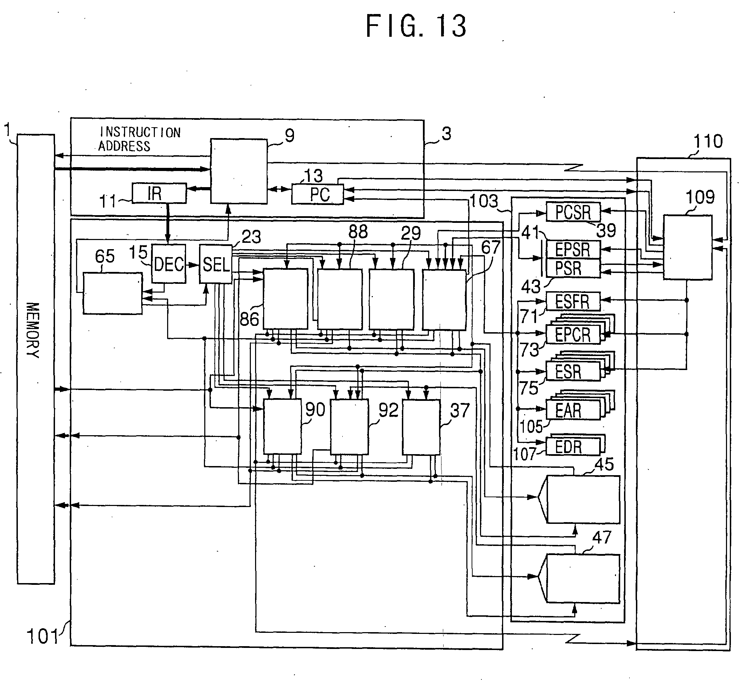

Fig.13 is a block diagram of the computer of the embodiment 4 of the present invention. As shown in Fig.13, the configuration of the computer of the embodiment 4 is almost the same as that of the embodiment 2 shown in Fig.5 except that an EAR 105 included in a register control part 103 is connected to a load instruction execution part 86, a store instruction execution part 88, a floating-point load instruction execution part 90 and a floating-point store instruction execution part 92 which are included in an instruction execution part 101, and an EDR 107 is connected to a store instruction execution part 88 and a floating-point store instruction execution part 92, and an interrupt control circuit 109 included in an interrupt control part 110 is connected to the ESFR 71, the EPCR 73 and the ESR 75 and is not connected to the EAR 105 and the EDR 107.

In the computer of the embodiment 4 having the above-mentioned configuration, when a load instruction is provided, the load instruction execution part 86 obtains an effective address from a value read from the general register 45, reads data from an area in the memory 1 corresponding to the effective address, and writes the data to the general register 45. When interrupt is detected while executing the instruction, this is notified to the interrupt control circuit 109 and the effective address is written into the EAR 105. When execution of the instruction ends, it is notified to the instruction issue checking part 65.

When the store instruction is provided, the store instruction execution part 88 obtains an effective address from a value read from the general register 45 and writes data read from the general register 45 into an area in the memory 1 corresponding to the effective address. When interrupt is detected while executing the instruction, this is notified to the interrupt control circuit 109, and the effective address is written into the EAR 105 and the store data is written into the EDR 107. When execution of the instruction ends, it is notified to the instruction issue checking part 65.

When the floating-point load instruction is provided, the floating-point load instruction execution part 90 obtains an effective address from a value read from the general register 45, reads data from an area in the memory 1 corresponding to the effective address, and writes the result into the floating-point register 47. When interrupt is detected while executing the instruction, this is notified to the interrupt control circuit 109, and the effective address is written into the EAR 105. When execution of the instruction ends, it is notified to the instruction issue checking part 65.

When the floating-point store instruction is provided, the floating-point store instruction execution part 92 obtains an effective address from a value read from the general register 45, and writes data read from the floating-point register 47 into an area in the memory 1 corresponding to the effective address. When interrupt is detected while executing the instruction, this is notified to the interrupt control circuit 109, and the effective address is written into the EAR 105 and the store data is written into the EDR 107. When execution of the instruction ends, it is notified to the instruction issue checking part 65.

As for the other operation, the computer of the embodiment 4 operates according to the flowcharts shown in Figs.8-11 like the computer of the embodiment 2.

In the same way as the computer of the embodiment 2, according to the computer of the embodiment 4 of the present invention, the interrupt processing can be performed with a simple configuration without decreasing effective rate of operation of hardware.

As mentioned above, according to the computer and the control method of the present invention, when interrupt becomes necessary, data at the time is held so that operation after the interrupt can be continued effectively by avoiding rerunning an instruction before the interrupt. Thus, the interrupt processing can be performed without decreasing the rate of operation of hardware.

In addition, according to the present invention, a plurality of data holding parts may be provided in parallel so that a plurality of instructions which may occur interruptions can be executed in parallel. Therefore, instructions can be executed further effectively. In addition, by providing the effective flags which indicates whether the data holding parts hold data, the operation can be performed more speedily.

The present invention is not limited to the specifically disclosed embodiments, and variations and modifications may be made without departing from the scope of the invention.

## Claims

1. A computer which processes an interrupt when an instruction in a program is executed, said computer **characterized by**:
a data holding part which holds data at a time when said interrupt starts to occur.

2. The computer as claimed in claim 1, wherein said data holding part includes a plurality of registers.

3. The computer as claimed in claim 2, said computer further comprising flags each of said flags indicating whether said data is held in said register.

4. The computer as claimed in claim 1, said computer further comprising a data storing part, wherein said data holding part holds said data to be stored in said data storing part at a time when said interrupt occurs while a store instruction is executed, said store instruction requesting that said data is stored in said data storing part.

5. The computer as claimed in claim 1, wherein said data holding part holds an instruction address of an instruction which causes said interrupt.

6. The computer as claimed in claim 1, wherein said data holding part holds data which indicates a factor of said interrupt.

7. The computer as claimed in claim 1, wherein said data holding part holds an effective address of a load instruction or a store instruction when said interrupt occurs while said load instruction or said store instruction is executed.

8. The computer as claimed in claim 1, wherein said data is used for recovery from said interrupt.

9. A control method of a computer which processes an interrupt when an instruction in a program is executed, said method **characterized by** the step of:
holding data at a time when said interrupt starts to occur.

10. The control method as claimed in claim 9, wherein said data is held in a plurality of registers and said data is used for recovery from a plurality of interrupts.

11. The control method as claimed in claim 10, wherein flags are used in which each of which flags indicates whether said data is held in said register.

12. The control method as claimed in claim 9, said control method comprising the step of:
holding said data to be stored in a data storing part in said computer at a time when said interrupt occurs while a store instruction is executed, said store instruction requesting that said data is stored in said data storing part.

13. The control method as claimed in claim 9, said control method comprising the step of:
holding an instruction address of an instruction which causes said interrupt.

14. The control method as claimed in claim 9, said control method comprising the step of:
holding data which indicates a factor of said interrupt.

15. The control method as claimed in claim 9, said control method comprising the step of:
holding an effective address of a load instruction or a store instruction when said interrupt occurs while said load instruction or said store instruction is executed.

16. The control method as claimed in claim 9, wherein said data is used for recovery from said interrupt.
